# EUROPEAN PATENT APPLICATION

(11) **EP 2 925 079 A1**
(43) Date of publication of application: **30.09.2015**
(21) Application number: 13856321.8
(22) Date of filing: 18.11.2013
(51) Int. Cl.: H04W 84/12, H04M 1/00, H04W 84/10

(54) **COMMUNICATION TERMINAL, COMMUNICATION SYSTEM, COMMUNICATION CONTROL METHOD, AND STORAGE MEDIUM**

(30) Priority: 20.11.2012 JP 2012254390
(71) Applicant: NEC Corporation, Tokyo 108-8001 (JP)
(72) Inventor: SHIGEMORI, Yo, Tokyo 108-8001 (JP)
(74) Representative: Betten & Resch
(86) International application number: PCT/JP2013/006738
(87) International publication number: WO 2014/080605

(57) **Abstract**

[Problem]

It is to enable easily using a wireless communication network provided in a specific region and easily acquiring information on the region.

[Means for Solution]

A communication terminal comprises a first communication means performing wireless communication with a base station in a specific region, a second communication means acquiring setting information that is information for setting a communication path for the wireless communication, a control means starting up the first communication means based on the setting information and a display means displaying display information acquired from the base station via the first communication means.

## Description

### Technical Field

The present invention relates to a communication terminal, a communication system, a communication control method, and a recording medium which use a wireless communication network provided in a specific region, for example, a commercial facility, or the like.

### Background Art

In recent years, a display screen of a communication terminal is increased in size, and enables displaying a lot of information. The communication terminal includes a data communication function in addition to a telephone call function as a mobile phone. The data communication function is used as a main purpose of the communication terminal.

A communication environment has been prepared, which provides the communication terminal as described above with communication data, and includes a wireless communication line of high speed and large capacity. Thereby, communication terminals with a large display screen are spreading and the information transferring medium is shifted from paper to the communication terminal.

A user connects a communication terminal with Internet through a mobile phone network (mobile carrier network), of like a third-generation mobile communication system (3G) communication system, transmitting and receiving telephone call data, and transmits and receives data or the like displayed on the screen. In other words, a user connects with an information providing server through the mobile phone network and Internet, requests the server of information, and acquires information which the user needs.

Since an environment in which a lot of information is acquired by the communication terminal is prepared, quick and correct information collection becomes possible. For example, paper as media providing information has problems that printing and distribution require much time and labor, and disposal requires much labor after it becomes unnecessary. Therefore, paper as media of information providing is being replaced to the communication terminal and this trend is considered to be accelerated from now on.

For example, in a commercial facility providing an opportunity for business between a guest and a seller, it is important to quickly and correctly provide a guest with information of inside the commercial facility. Until now, paper media on which information with characters, images, or the like is printed is distributed to guests or posted as an inside-facility guidance map in order to perform information providing.

However, paper media is not necessarily given to all guests due to restriction in the number of printed papers, a distribution method, or the like. Therefore, the advertisement effect may not be sufficiently shown. Furthermore, the paper media cannot cope with information that requires immediacy, such as announcement of time service. That is because printing and distribution works are needed every time information is changed.

On the other hand, guests have to connect their communication terminal with a mobile phone network and Internet, for example, with use of the 3G network and to search information on commercial facilities in order to acquire the information with the communication terminal. Steps of searching the information on commercial facility from the top page of Internet publicly disclosed for communication terminals are necessary and take much time and labor to reach a page providing target information.

Besides, communication in the mobile phone network with the 3G network is lacking communication capacity due to increase in recent usage of data communication in a communication terminal, and cannot keep sufficient communication speed.

Regarding this, a method which is called data offload is known, which connects to Internet with use of wireless communication such as a wireless LAN (Local Area Network) communication in order to avoid communication in a mobile phone network and keep a higher speed communication line. Communication with the mobile phone network is bypassed to the wireless LAN network by the data offload. Thereby, load on the mobile phone network is decreased and communication speed sufficient for processes in a wireless communication terminal is kept.

However, a reaching distance of a communication radio wave of the wireless LAN is generally short. Therefore, if the number of arranged wireless LAN base stations is not sufficient, a place where a communication process using the wireless LAN is possible is limited. Since a user, during a movement, can hardly perform communication with use of the wireless LAN even though the wireless LAN function is activated, a communication state cannot be maintained even though communication is possible and battery of the communication terminal is wasted. Therefore, a user has to worry about battery residual quantity and the wireless LAN function is not frequently used even in the communication terminal in which the wireless LAN is usable.

In order to solve the above problem, for example, Patent Document 1 discloses a service providing system in which a communication terminal which is in a specific region acquires necessary information required for connection from a gate located in an entrance, and connects to an information providing server to acquire necessary information. That is to say, entering a specific region, the communication terminal acquires the necessary information required for connection from the gate and accesses a specific service with use of the information.

### [Citation List]

### [Patent Literature]

[Patent Literature 1]Japanese Patent Application Laid-Open No. 2005-149303

### Summary of Invention

### [Technical Problem]

The service providing system disclosed in Patent Document 1 only distributes access permission information for the service providing system to guests at a gate located at an entrance. Therefore, communication terminals of the guests access the service providing server through 3G network usually used. When many guests access the service providing server via a base station at the same time, communication speed is further decreased and sufficient service could not be provided.

Besides, in Patent Document 1, when a guest enters a specific region, the guest receives from the gate an address and an ID specific to the guest to access the service providing server. However, the guest has to activate an application for access by oneself. The service providing system of Patent Document 1 has a problem that labor for entry procedure is increased.

The present invention is made in view of the above descriptions, and the object thereof is to provide a communication terminal, a communication system, and a communication control method which can easily use a wireless communication network provided in a specific region and can easily acquire information on the region.

### [Solution to Problem]

A communication terminal of the present invention comprises a first communication means performing wireless communication with a base station in a specific region, a second communication means acquiring setting information that is information for setting a communication path for the wireless communication, a control means starting up the first communication means based on the setting information and a display means displaying display information acquired from the base station via the first communication means.

A communication system of the present invention comprises a communication terminal, a base station performing wireless communication with the communication terminal in a specific region, a setting information supply means supplying setting information that is information for setting a communication path for the wireless communication to the communication terminal, and an information supply means supplying the communication terminal with display information via the base station, wherein the communication terminal comprises a first communication means performing wireless communication with the base station, a second communication means acquiring the setting information from the setting information supply means, a control means starting up the first communication means based on the setting information, and a display means displaying display information acquired from the base station through the wireless communication.

A communication control method of the present invention in a communication terminal comprising a first communication means performing wireless communication with a base station in a specific region, the method comprises acquiring setting information that is information for setting a communication path for the wireless communication via a second communication means, starting up the first communication means based on the setting information, and displaying display information acquired from the base station via the first communication means.

A storage medium of the present invention storing a communication control program causing a computer of a communication terminal comprising a first communication means performing wireless communication with a base station in a specific region to execute a process of acquiring setting information that is information for setting a communication path for the wireless communication via second communication means, a process of starting up the first communication means based on the setting information, and a process of displaying display information acquired from the base station via the first communication means.

### [Advantageous Effects of Invention]

According to the present invention, the wireless communication network provided in the specific region can be easily used and information on the region can be easily acquired.

### [Brief Description of the Drawings]

[Fig. 1] Fig. 1 is a block diagram illustrating a configuration example of a communication terminal related to a first embodiment of the present invention.
[Fig. 2] Fig. 2 is a configuration diagram illustrating an example of a communication system related to a second embodiment of the present invention.
[Fig. 3] Fig. 3 is a block diagram illustrating a configuration example of a communication terminal shown in Fig. 2.
[Fig. 4] Fig. 4 is a functional block diagram illustrating main functions of a control unit shown in Fig. 3.
[Fig. 5] Fig. 5 is a network diagram illustrating an example of a wireless LAN network in a commercial facility shown in Fig. 2.
[Fig. 6] Fig. 6 is an operation explaining diagram explaining a relation between a position and an operation of a communication terminal shown in Fig. 2 when it enters a commercial facility.
[Fig. 7] Fig. 7 is a flowchart explaining an operation example of the communication terminal shown in Fig. 2 when it enters the commercial facility.
[Fig. 8] Fig. 8 is a block diagram illustrating a configuration example of a communication terminal related to a third embodiment of the present invention.
[Fig. 9A] Fig. 9A is a graph illustrating time change of signal strength when a communication terminal shown in Fig. 8 approaches a wireless LAN access point.
[Fig. 9B] Fig. 9B is a graph illustrating time change of signal strength when the wireless terminal shown in Fig. 8 goes away from the wireless LAN access point.
[Fig. 10] Fig. 10 is a flowchart explaining an operation example of the communication terminal shown in Fig. 8,

### Description of Embodiments

While, embodiments will be described in detail with reference to drawings, the present invention is not limited to the following embodiments.

### [First Embodiment]

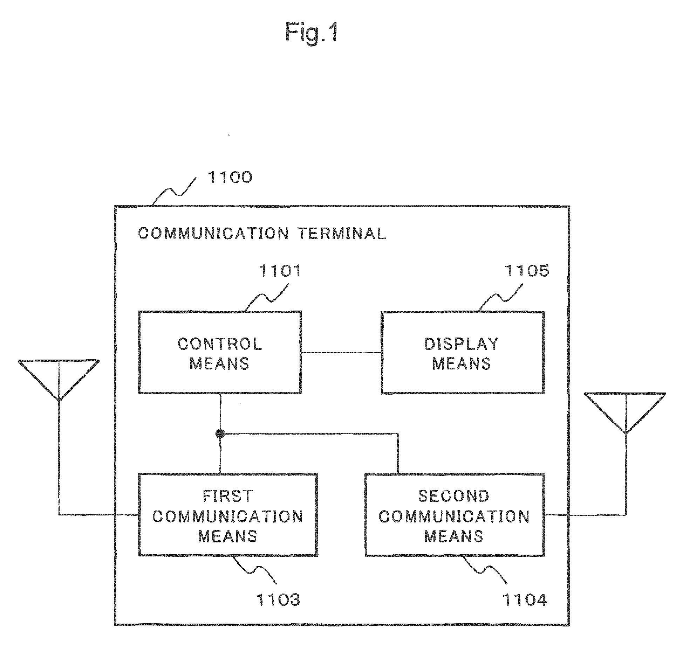

Fig. 1 is a block diagram illustrating a configuration example of a communication terminal 1100 related to a first embodiment of the present invention. The communication terminal 1100 includes a first communication means 1103, a second communication means 1104, a control means 1101, and a display means 1105.

The first communication means 1103 performs wireless communication with a base station (not shown in Fig. 1) in a specific region. The second communication means 1104 communicates with a setting information supply means (not shown in Fig. 1) which is arranged at a predetermined position in the specific region (e.g. gateway) to acquire setting information which is information by which a communication path of the wireless communication is set with respect to the communication terminal 1100. The control means 1101 activates the first communication means 1103 based on the setting information. The display means 1105 displays display information acquired from the base station through the wireless communication.

That is to say, when entering the specific region, the communication terminal 1100 acquires the setting information from the setting information supply means, sets the wireless communication path to the base station, and displays in the display means the information acquired from the base station.

Therefore, according to the first embodiment, it is possible to easily use the wireless communication network provided in the specific region and to easily acquire information on the region.

### [Second Embodiment]

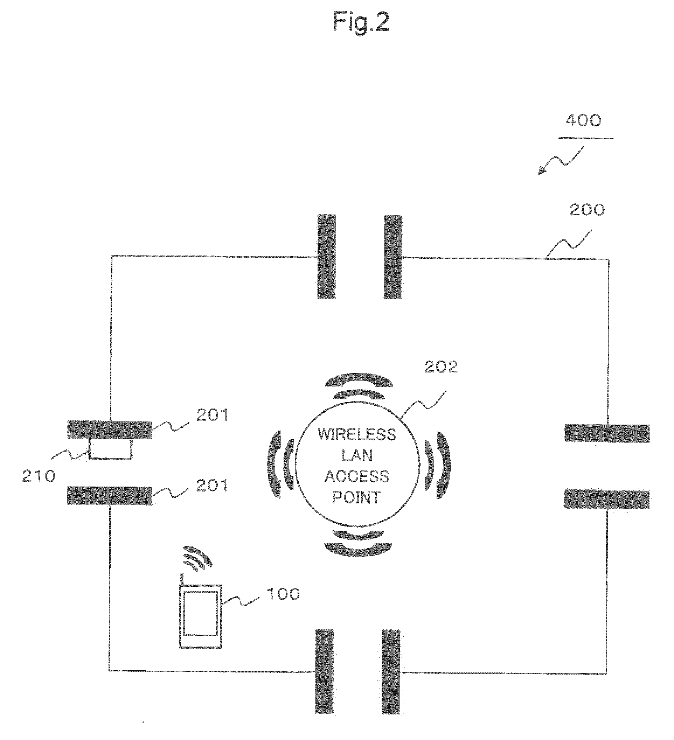

Fig. 2 is a configuration diagram illustrating an example of a communication system 400 related to a second embodiment of the present invention. The communication system 400 includes a communication terminal 100 and a commercial facility 200.

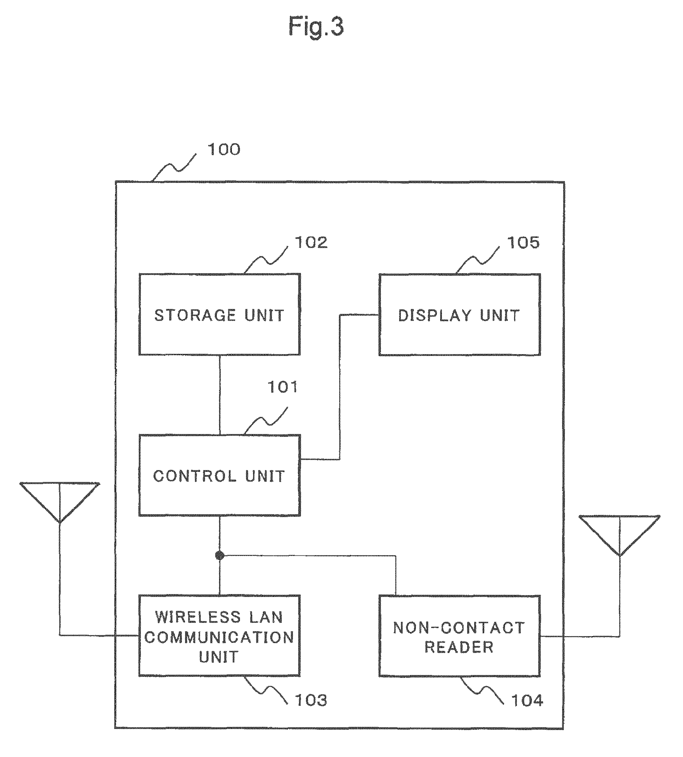

Fig. 3 is a block diagram illustrating a configuration example of the communication terminal 100 shown in Fig. 2. The communication terminal 100 includes a control unit 101, a storage unit 102, a wireless LAN communication unit 103, a non-contact reader 104, and a display unit 105.

The wireless LAN communication unit 103 communicates with a wireless LAN access point 202 of the commercial facility 200 through the wireless LAN. The non-contact reader 104 communicates with a non-contact tag 210 placed at a gate 201 by a short distance wireless system. The storage unit 102 records predetermined information. The display unit 105 displays predetermined information.

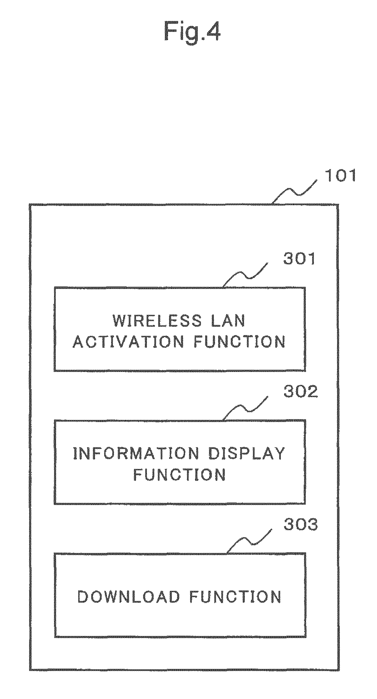

Fig. 4 is a functional block diagram illustrating main functions of the control unit 101. The control unit 101 includes a wireless LAN activation function 301, an information display function 302, and a download function 303. These functions are described below in detail.

It should be noted the communication terminal 100 may be equipment having a telephone function as a mobile phone. In this case, the communication terminal 100 includes a communication unit using a communication system for telephone, and a speaker and a microphone as an input/output unit.

Explanation of Fig. 2 will be reverted to. The commercial facility 200 includes the gate 201, the wireless LAN access point 202, and the non-contact tag 210.

The gate 201 is arranged at the gateway of the commercial facility 200. The non-contact tag 210 is arranged at the gate 201. The non-contact tag 210 communicates with the non-contact reader 104 of the communication terminal 100 with use of the short distance wireless system. The wireless LAN access point 202 communicates with the communication terminal 100 with use of the wireless LAN in the commercial facility 200.

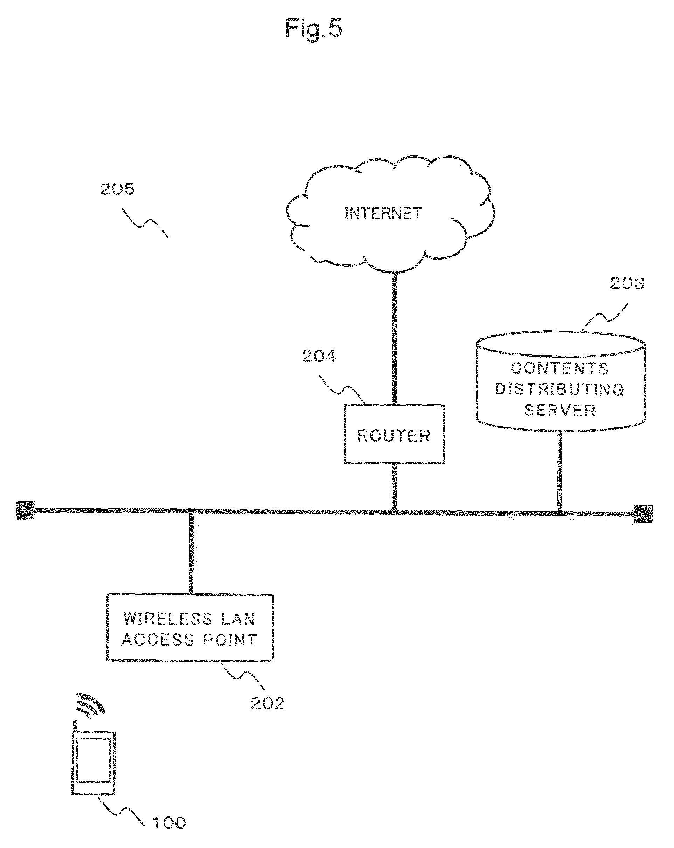

Fig. 5 is a network diagram illustrating an example of a wireless LAN network 205 in a commercial facility 200. The wireless LAN network 205 is a bus type network including the wireless LAN access point 202 and a contents distributing server 203. The wireless LAN network 205 is connected to Internet through a router 204.

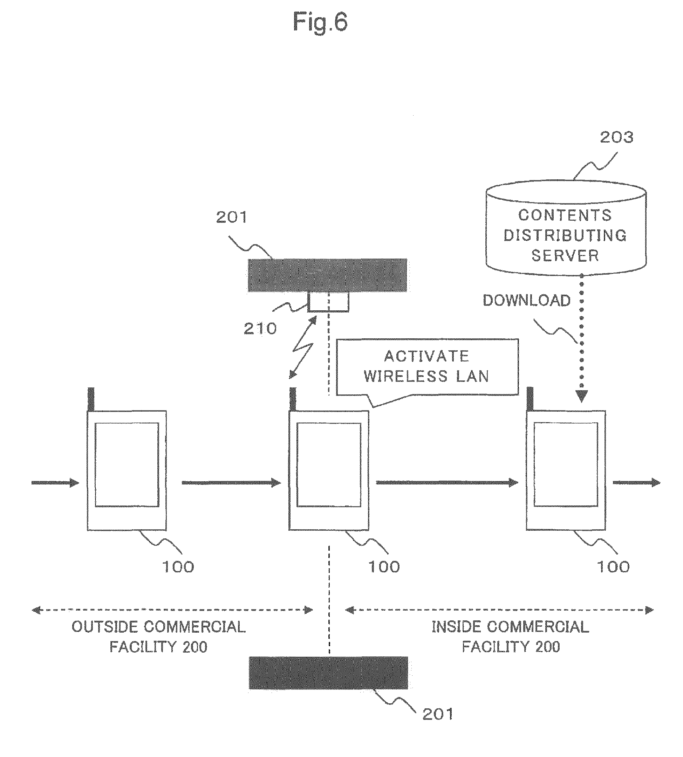

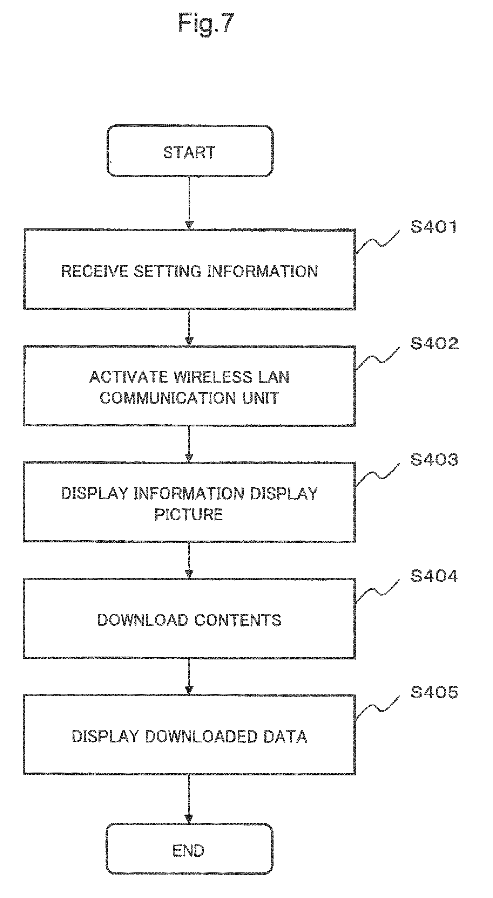

Fig. 6 is an operation explaining diagram explaining a relation between a position and an operation of the communication terminal 100 when the communication terminal 100 enters a commercial facility. Fig. 7 is a flowchart explaining an operation example of the communication terminal 100 when the terminal 100 enters the commercial facility 200.

If a user brings the communication terminal 100 closer to the non-contact tag 210 when passing through the gate 201, the non-contact reader 104 communicates with the non-contact tag 210 by the short distance wireless system. The non-contact reader 104 receives setting information (information by which a communication path for the wireless LAN communication is set to the communication terminal 100) from the non-contact tag 210 (step S401), and outputs the received setting information to the control unit 101.

The control unit 101 activates the wireless LAN communication unit 103 by the wireless LAN activation function 301 (step S402).

The control unit 101 displays an information display picture on the display unit 105 by the information display function 302 (step S403). The information display picture is, for example, a browser on which data acquired through Internet is displayed.

The control unit 101 downloads contents (e.g. facility guide map) from the contents distributing server 203 by the download function 303 (step S404).

The control unit 101 displays downloaded data on the information display screen (step S405).

In the second embodiment described above, when a user enters the commercial facility 200, the wireless LAN communication unit 103 of the communication terminal 100 is automatically activated and information on the commercial facility 200 is displayed on the display unit 105. Therefore, a manipulation of activating the wireless LAN communication unit 103 and a manipulation of searching information on the commercial facility 200 are not necessary.

That is to say, according to the second embodiment described above, the wireless LAN provided in the commercial facility 200 is easily used and the information on the commercial facility 200 is easily acquired.

Furthermore, when communication with a mobile carrier network is performed at the time of connection to the wireless LAN, the communication is performed through the wireless LAN. Since the data offload is carried out, load of the mobile carrier network, like a 3G network, can be reduced. Generally the wireless LAN is faster than the 3G network. Therefore, when the data offload is carried out, a user can use Internet rapidly.

It should be noted when a user finds the wireless LAN is available, the user activates the browser which is usually used, connects with Internet through the wireless LAN and can acquire information on Internet. In this situation, display on the information display screen is continued.

Moreover, the commercial facility 200 can identify the communication terminal 100 located in the commercial facility 200 by communication with the communication terminal 100 at the time of passing through the gate 201. Therefore, the commercial facility 200 can provide a user with a service which is limited within the commercial facility 200 (e.g. information on a time zone of a time service).

The information displayed on the information display screen may include advertisement information in addition to the information on the commercial facility 200, like the facility guide map. The wireless LAN service can be provided at no cost or a low price due to display of the advertisement information. If the wireless LAN service can be provided at no cost or a low price, entry of a guest who intends to use only Internet is expected when no access point of the wireless LAN is located near the commercial facility 200.

Incidentally, when a user moves to the outside of the commercial facility 200, signal strength of the wireless LAN is decreased. In this case, it is difficult to use a network through the wireless LAN.

Then, the non-contact tag for exit of a user may be arranged at the gate 201, and the wireless LAN communication unit 103 may be stopped when the communication terminal 100 comes into contact with the non-contact tag for exit at the gate 201 at the time of exit. Thereby, a user can stop usage of the wireless LAN by the easy manipulation. Namely, a risk of forgetting a terminating manipulation of the wireless LAN can be largely reduced. Therefore, several problems (increase of power consumption and load of a communication line) which occur when the wireless LAN communication is continued in a useless manner under an inferior communication environment can be avoided.

It should be noted a wireless communication service provided in the commercial facility 200 is not limited to the wireless LAN.

Besides, a method for acquiring the setting information is not limited to the short distance wireless system used by the non-contact tag 210 and the non-contact reader 104. For example, the setting information may be acquired by reading QR code (registered trade mark) which is given to each guest at the time of entrance with use of the communication terminal 100 with imaging means.

The number of the wireless LAN access points 202 arranged in the commercial facility 200 may be two or more.

### [Third Embodiment]

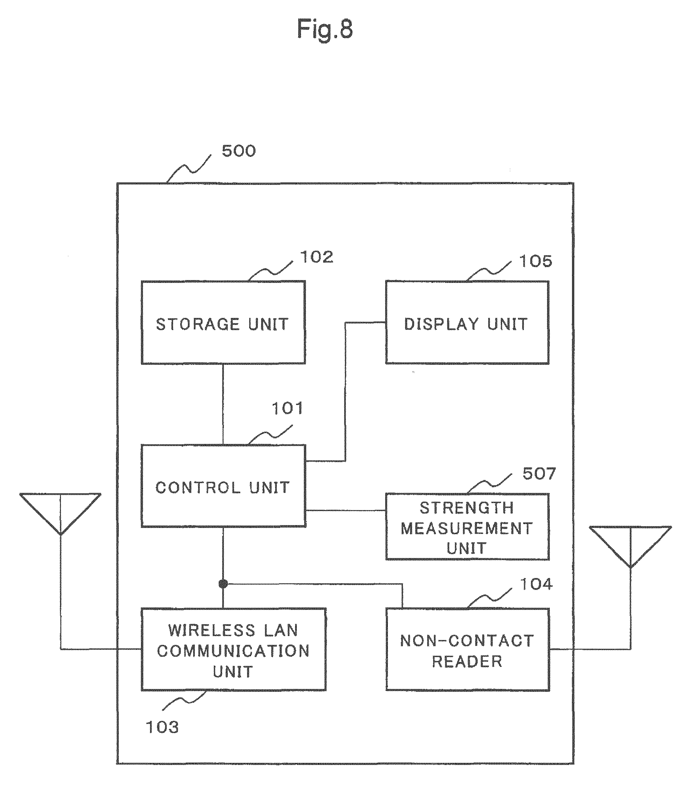

Fig. 8 is a block diagram illustrating a configuration example of a communication terminal 500 of a third embodiment of the present invention. A feature of the communication terminal 500 is provision of a strength measurement unit 507 for measuring strength of a signal received by the wireless LAN communication unit 103. The elements except for the strength measurement unit 507 in the communication terminal 500 are the same as the elements of the communication terminal 100. Therefore, in Fig. 8, the elements have symbols of the same numbers as those in Fig. 3, and explanations thereof are omitted below.

The strength measurement unit 507 repeatedly measures strength of the signal (hereinafter referred to as "signal strength") received by the wireless LAN communication unit 103 at predetermined measurement intervals, and holds a plurality of signal strengths within a predetermined period of time. The strength measurement unit 507 compares the signal strengths with a predetermined threshold value, and determines whether or not the number of the signal strengths which are equal to or larger than a predetermined threshold value or the number of the signal strengths which are smaller than a predetermined threshold value is equal to or more than a predetermined number. The determination result is sent to the control unit 101.

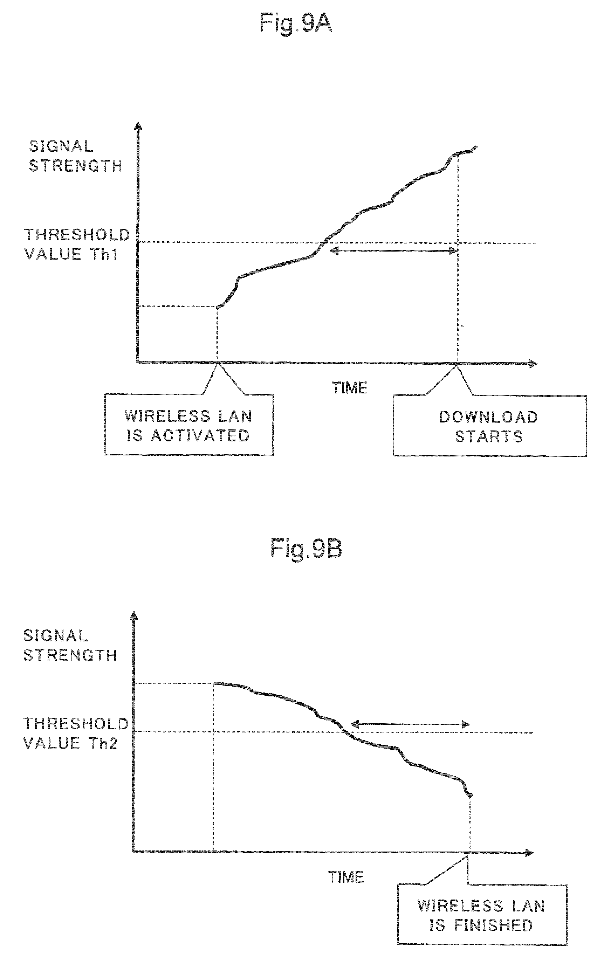

Fig. 9A is a graph illustrating time change of signal strength when the communication terminal 500 approaches the wireless LAN access point 202.

When the communication terminal 500 passes through the gate 201 and the wireless LAN communication unit 103 is activated, the strength measurement unit 507 starts measuring signal strength. If a state in which the signal strength is over a predetermined threshold value Th1 continues for a predetermined period of time or more, the control unit 101 starts downloading contents from the contents distributing server 203.

Fig. 9B is a graph illustrating time change of signal strength when the wireless terminal 500 goes away from the wireless LAN access point 202.

If the wireless terminal 500 goes away from the wireless LAN access point 202 while the wireless LAN communication unit 103 is activated and while the strength measurement unit 507 measures signal strength, the signal strength is gradually decreased. If a state in which the signal strength is lower than a predetermined threshold value Th2 continues for a predetermined period of time or more, the control unit 101 stops the wireless LAN communication unit 103.

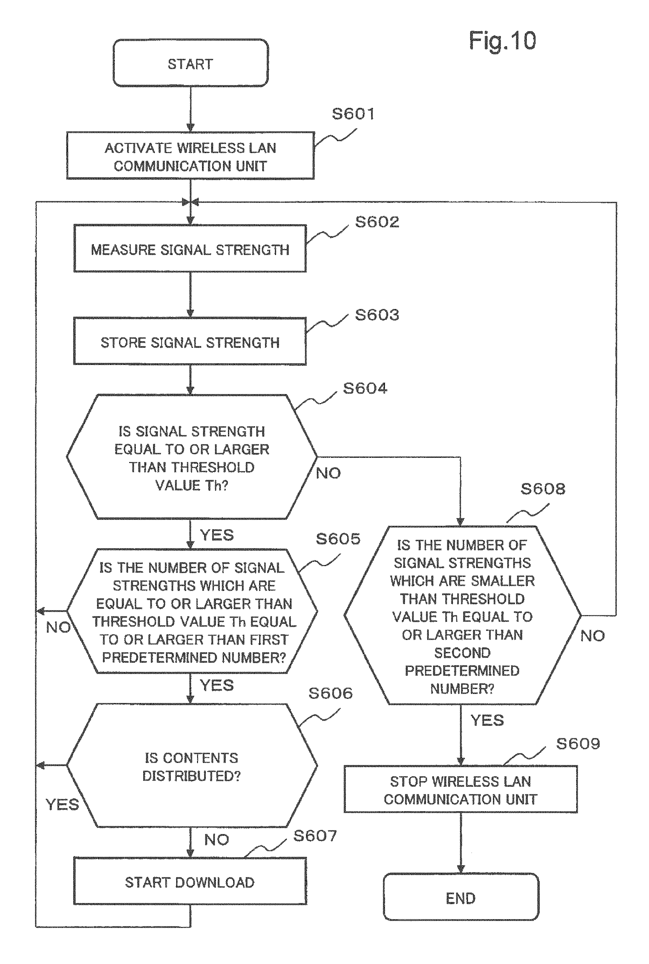

Fig. 10 is a flowchart explaining an operation example of the communication terminal 500.

It should be noted in order to make explanations clearer below, a case in which the threshold value Th1 is equal to the threshold value Th2 (threshold value is "Th" in this case) is exemplified.

When a user enters the commercial facility 200 (when the communication terminal 500 receives setting information from the non-contact tag 210), the control unit 101 activates the wireless LAN communication unit 103 (step S601).

When measurement timing has arrived, the strength measurement unit 507 measures signal strength (step S602). The strength measurement unit 507 stores the signal strength (step S603).

The strength measurement unit 507 compares the signal strength with the threshold value Th, and determines whether or not the signal strength is equal to or larger than the threshold value Th (step S604).

If the signal strength is equal to or larger than the threshold value Th (YES in step S604), the strength measurement unit 507 determines whether or not the number of signal strengths which are equal to or larger than the threshold value Th is equal to or larger than the first threshold value of the number of times C1 (step S605).

If the number of signal strengths which are equal to or larger than the threshold value Th is smaller than the first threshold value of the number of times C1 (NO in step S605), it is determined that sufficient time has not elapsed since the signal strength had been equal to or larger than the threshold value Th. In this case, the control unit 101 does not start download of contents. Measurement of signal strength is carried out again (step S602).

If the number of signal strengths which are equal to or larger than the threshold value Th is equal to or larger than the first threshold value of the number of times C1 (YES in step S606) and contents is not distributed yet (NO in step S606), the control unit 101 starts download of contents from the contents distributing server 203 (step S607). If contents are already distributed (YES in step S606), measurement of signal strength is carried out again (step S602).

If the signal strength is smaller than the threshold value Th (NO in step S604), the strength measurement unit 507 determines whether or not the number of signal strengths which are smaller than the threshold value Th is equal to or larger than the second threshold value of the number of times C2 (step S608).

If the number of signal strengths which are smaller than the threshold value Th is smaller than the second threshold value of the number of times C2 (NO in step S608), it is determined that sufficient time does not elapsed since the signal strength had been smaller than the threshold value Th. In this case, the control unit 101 does not stop the wireless LAN communication unit 103. Measurement of signal strength is carried out again (step S602).

If the number of signal strengths which are smaller than the threshold value Th is equal to or larger than the second threshold value of the number of times C2 (YES in step S608), it is determined that communication with the wireless LAN access point 202 cannot be maintained. Therefore, the control unit 101 stops the wireless LAN communication unit 103 (step S609).

It should be noted Fig. 9B shows signal strength is gradually decreased from the state in which the signal strength once exceeds the threshold value Th2 to be lower than the threshold value Th2 in a short time. However, sometimes, the signal strength does not exceed the threshold value Th2 at all. For example, if the user goes back without entering the commercial facility 200 though the wireless LAN communication unit 103 is activated when the user passes through the gate 201, the signal strength never exceeds the threshold value Th2. Even in such case, processes shown in the flowchart of Fig. 10 are adaptable. Specifically, the decision in step S604 is "No" from the start. When a predetermined period of time (measurement interval of signal strength×second threshold value of the number of times C2) elapses after the wireless LAN communication unit 103 is activated, the wireless LAN communication unit 103 automatically stops.

The measurement interval of the strength measurement unit 507, the number of signal strengths stored in the strength measurement unit 507 (i.e. depth of buffer), the first threshold value of the number of times C1 and the second threshold value of the number of times C2 can be set to an arbitrary value.

Depending on a situation of user's way of holding the communication terminal 500, the signal strength may be temporarily decreased. In such case, in order to maintain the communication with the wireless LAN access point 202, the strength measurement unit 507 may continuously measure the signal strength for a predetermined period of time or by the predetermined number of times, and may determine maintaining of the communication with the wireless LAN access point 202 or termination thereof in accordance with a predetermined procedures.

In the above description, the case in which the threshold value Th1 is equal to the threshold value Th2 is exemplified. However, the threshold value Th1 may be different from the threshold value Th2.

For example, if the threshold value Th1 is larger than the threshold value Th2, if it is determined that signal strength is equal to or larger than the threshold value Th2 and is equal to or smaller than the threshold value Th1 in step S604, process may return to step S602 and be branched so that measurement of signal strength is continued.

If the threshold value Th1 is smaller than the threshold value Th2, it is considered that download of contents is possible, but communication quality of the wireless LAN is not sufficient. In this case, if communication quality has priority, a process only has to proceed to step S608. On the other hand, if a bit of decrease of communication quality is accepted and download of contents is continued, a process only has to proceed to step S605.

In the third embodiment above described, when signal strength is increased when a user enters the commercial facility 200 and approaches the wireless LAN access point 202, predetermined contents are downloaded and automatically displayed on the display unit 105 of the communication terminal 500. If a user leaves the commercial facility 200 and signal strength is decreased, the wireless LAN communication unit 103 automatically stops.

That is to say, after the communication terminal 500 contacts with the non-contact tag 210 at the time of passing through the gate 201, operations of the wireless LAN communication unit 103 automatically continues or stops. Therefore, problems (increase of power consumption or increase of load on communication line, etc.) which occur when the wireless LAN communication wastefully continues under an inferior communication environment are therefore avoidable.

It should be noted a device which carries out the process operation above described may be configured by storing a program for executing the process operation above described into a computer-readable recording medium, like a flexible disc, a CD-ROM (Compact Disk Read-Only Memory), or MO (Magneto-Optical disk), distributing it, and installing the program into a computer.

While the invention has been particularly shown and described with reference to exemplary embodiments thereof, the invention is not limited to those embodiments. It will be understood by those of ordinary skill in the art that various changes in form and details may be made therein without departing from the spirit and scope of the present invention as defined by the claims.

This application is based upon and claims the benefit of priority from Japanese Patent Application No. 2012-254390, filed on November 20, 2012, the disclosure of which is incorporated herein in its entirety by reference.

### [Industrial Applicability]

The present invention is not limited to the exemplary embodiments described above, and is suitably applicable to a communication system in which a communication path can be established only within a predetermined region.

### [Reference Signs List]

100, 500, 1100, communication terminal
101 control unit
102 storage unit
103 wireless LAN communication unit
104 non-contact reader
105 display unit
200 commercial facility
201 gate
202 wireless LAN access point
203 contents distributing server
204 router
205 wireless LAN network
210 non-contact tag
301 wireless LAN activation function
302 information display function
303 download function
400 communication system
507 strength measurement unit
1101 control means
1103 first communication means
1104 second communication means
1105 display means

## Claims

1. A communication terminal comprising:
a first communication means performing wireless communication with a base station in a specific region;
a second communication means acquiring setting information that is information for setting a communication path for the wireless communication;
a control means starting up the first communication means based on the setting information; and
a display means displaying display information acquired from the base station via the first communication means.

2. The communication terminal according to claim 1 further comprising a strength measurement means measuring strength of a signal received from the base station,
wherein the control means controls the first communication means based on the strength of the signal.

3. The communication terminal according to claim 2,
wherein the control means starts download of information via the base station by the first communication means if a state in which the strength of the signal is over a predetermined strength threshold value continues for a predetermined period of time or more, and stops the first communication means if a state in which the strength of the signal is under the strength threshold value continues for a predetermined period of time or more.

4. The communication terminal according to any one of claim 1 through claim 3,
wherein the display information includes advertisement information and a usage charge of the wireless communication with the base station is determined including an advertisement charge that is based on a display of the advertisement information.

5. The communication terminal according to any one of claim 1 through claim 4,
wherein the first communication means communicates with the base station through a wireless LAN (Local Area Network).

6. The communication terminal according to any one of claim 1 through claim 5,
wherein the second communication means performs communication with a setting information supply means supplying the setting information by a short distance wireless system.

7. The communication terminal according to any one of claim 1 through claim 6,
wherein the display means displays a display picture generated based on the setting information.

8. A communication system, comprising:
a communication terminal;
a base station performing wireless communication with the communication terminal in a specific region;
a setting information supply means supplying setting information that is information for setting a communication path for the wireless communication to the communication terminal; and
an information supply means supplying the communication terminal with display information via the base station,
wherein the communication terminal comprises:
a first communication means performing wireless communication with the base station;
a second communication means acquiring the setting information from the setting information supply means;
a control means starting up the first communication means based on the setting information; and
a display means displaying display information acquired from the base station through the wireless communication.

9. A communication control method in a communication terminal comprising a first communication means performing wireless communication with a base station in a specific region, the method comprising:
acquiring setting information that is information for setting a communication path for the wireless communication via a second communication means;
starting up the first communication means based on the setting information; and
displaying display information acquired from the base station via the first communication means.

10. A storage medium storing a communication control program causing a computer of a communication terminal comprising a first communication means performing wireless communication with a base station in a specific region to execute,
a process of acquiring setting information that is information for setting a communication path for the wireless communication via second communication means;
a process of starting up the first communication means based on the setting information; and
a process of displaying display information acquired from the base station via the first communication means.
